# EUROPEAN PATENT SPECIFICATION

(11) **EP 0 690 424 B1**
(45) Date of publication and mention of the grant of the patent: **25.10.2000**
(21) Application number: 95115088.7
(22) Date of filing: 18.02.1992
(51) Int. Cl.: G08B 3/10

(54) **Radio pager**
Funkrufempfänger
Récepteur d'appel radio

(30) Priority: 19.02.1991 JP 4592991; 25.02.1991 JP 5024891
(43) Date of publication of application: 03.01.1996
(62) Divisional of application: 92102675.3
(73) Proprietor: NEC CORPORATION, Tokyo (JP)
(72) Inventor: Kudoh, Kazuhiro, Minato-ku, Tokyo (JP); Ishiguro, Tetsumi, Minato-ku, Tokyo (JP)
(74) Representative: VOSSIUS & PARTNER

(56) References cited:
- US-A- 4 012 672
- US-A- 4 131 851
- US-A- 4 283 796

## Description

The present invention relates to a radio pager capable of changing the reception frequency thereof, as desired, and, more particularly, to a radio pager having a casing which allows a crystal oscillator to be replaced with ease.

US-A-4 283 796 discloses a portable device such as a radio pager, having a battery housing or retainer accessible from the outside of the housing and a socket for a plug-in module, for controlling the device, to be inserted through the battery housing opening. Contacts are made by inserting the module, which is not very reliable in a portable device.

Generally, when call signals are transmitted by a plurality of frequencies, a radio pager has to change the reception frequency thereof in matching relation to the frequency of the call signal. With a radio pager having a local oscillation circuit implemented by a crystal oscillator, it has been customary to change the reception frequency by replacing the crystal oscillator and adjusting a plurality of tuning circuits including an antenna tuning circuit. Specifically, the tuning frequency of the tuning circuit has to be changed in conformity to the frequency of the call signal. However, the adjustment of the tuning frequency needs expert techniques and a jig for effecting the adjustment and, therefore, cannot be easily entrusted to a service company in charge of the paging system, as distinguished from a manufacturer. On the other hand, in the case of a radio pager having a synthesizer type local oscillation circuit, changing the reception frequency results in a decrease in the life of a battery since such a local oscillation circuit consumes far greater current than the local oscillation circuit implemented by a crystal oscillator.

Further, a current trend is toward a radio pager having a small and thin configuration and, in addition, having a casing which is mechanically strong. It is necessary, therefore, to assemble the casing by use of a number of screws or similar fastening means. As a result, designing a casing allowing a printed circuit board to be readily removed therefrom or a casing having a socket for replaceable part is extremely difficult to design. Therefore, to replace the crystal oscillator, the printed circuit board has to be removed from the casing by a number of troublesome steps.

It is an object of the present invention to provide a radio pager having a casing which promotes the ease of replacement of a crystal oscillator.

This object is solved by the features claimed in claim 1.

The above and other objects, features and advantages of the present invention will become more apparent from the following detailed description taken with the accompanying drawings in which:
FIG. 1 is a block diagram schematically showing an electrical arrangement of a conventional radio pager;
FIG. 2 is a vertical section showing a specific construction of a casing included in the pager of FIG. 1;
FIG. 3 is a block diagram schematically showing an electrical arrangement of a radio pager;
FIG. 4 is a flowchart demonstrating a specific operation of the pager;
FIG. 5 is a vertical section of a casing according to the invention; and
FIG. 6 is a bottom view of the casing shown in FIG. 5.

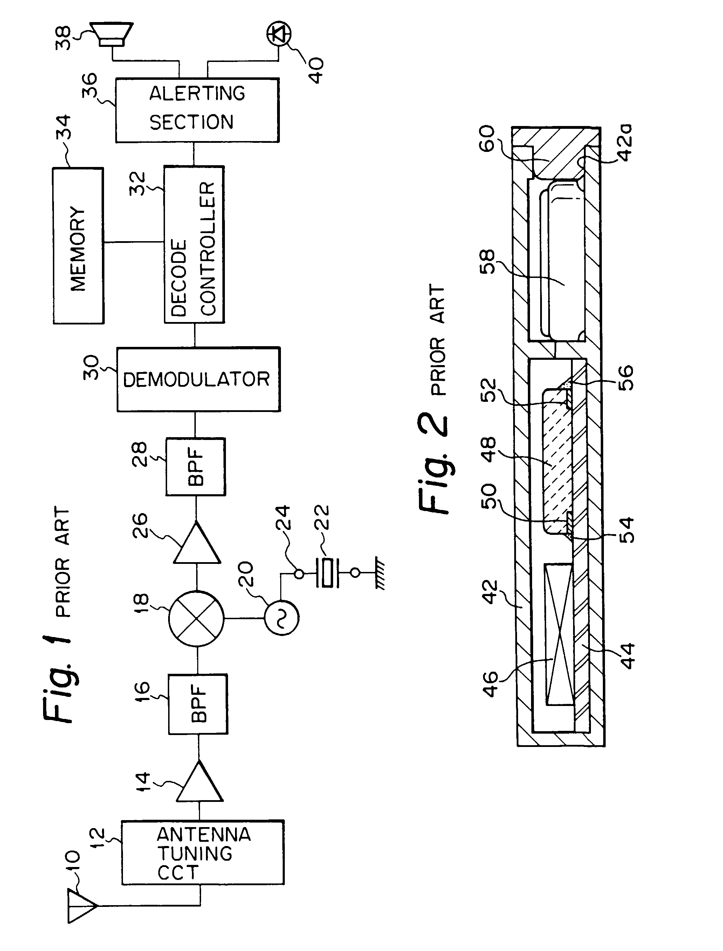

To better understand the present invention, a brief reference will be made to a conventional radio pager, shown in FIG. 1. The conventional pager is of the type allowing one to change the reception frequency by replacing a crystal oscillator included in a local oscillation circuit and adjusting a plurality of tuning circuits including an antenna tuning circuit. As shown, the pager has an antenna tuning circuit 12 between an antenna 10 and an RF (Radio Frequency) amplifier 14. The antenna tuning circuit 12 is so constructed as to minimize the transmission loss at a desired reception frequency. The RF amplifier 14 delivers an output thereof to a bandpass filter (BPF) 16. The output of the BPF 16 is applied to one input terminal of a mixer 18. Applied to the other input terminal of the mixer 18 is a local oscillation signal from a local oscillation circuit 20. The mixer 18 combines the two inputs to produce a desired IF (Intermediate Frequency) signal. A crystal oscillator 22 is connected to the local oscillation circuit 20 via a socket 24 and is replaceable for implementing a desired reception frequency. The IF signal from the mixer 18 is fed to an IF amplifier 26 to be amplified thereby. The resulting output of the IF amplifier 26 is routed through a BPF 28 to a demodulator 30. In response, the demodulator 30 demodulates the data signal having been modulated and delivers the demodulated data signal to a decode controller 32. A memory 34 stores an address assigned to the radio pager and is connected to the decode controller 32. If an address included in the data signal from the demodulator 30 is identical with the address stored in the memory 34, the decode controller 32 feeds an alert control signal to an alerting section 36. In response, the alerting section 36 drives a loudspeaker 38 or a light emitting diode (LED) 40 to alert the user of the pager to the call. The memory 34 stores, in addition to the address, information designating either of the loudspeaker 38 and LED 40.

The conventional pager having the above construction has to have the tuning frequency of the tuning circuit 12 changed in conformity to the frequency of a call signal. This is not practicable without resorting to expert techniques and a jig for adjustment and, therefore, cannot be easily entrusted to a service company in charge of the paging system as distinguished from a manufacturer, as discussed earlier.

FIG. 2 shows a specific configuration of the casing of a conventional radio pager. As shown, the casing 42 accommodates a printed circuit board 44 on which a circuit part 46 and a crystal oscillator 48 are mounted. The crystal oscillator 48 is affixed to the printed circuit board 44 by having the terminal electrodes 50 and 52 thereof soldered, as at 54 and 56, to wirings provided on the circuit board 44. Since the pager shown in FIG. 2 is relatively thin, it is powered by a coin type battery 58 which is removable through an opening 42a formed in the casing 42. Usually, the opening 42a is closed by a lid 60. The problem with such a casing structure is that one cannot change the reception frequency, i.e., crystal oscillator 48 without removing the whole printed circuit board 44 from the casing 42 and then replacing the crystal oscillator 48. Designing a casing which allows the printed circuit board 44 to be easily removed from the casing 42 or a casing having the socket 24, FIG. 1, is difficult to design, as also stated previously. It is, therefore, necessary to perform a substantial number of steps in the event of replacing the crystal oscillator 48.

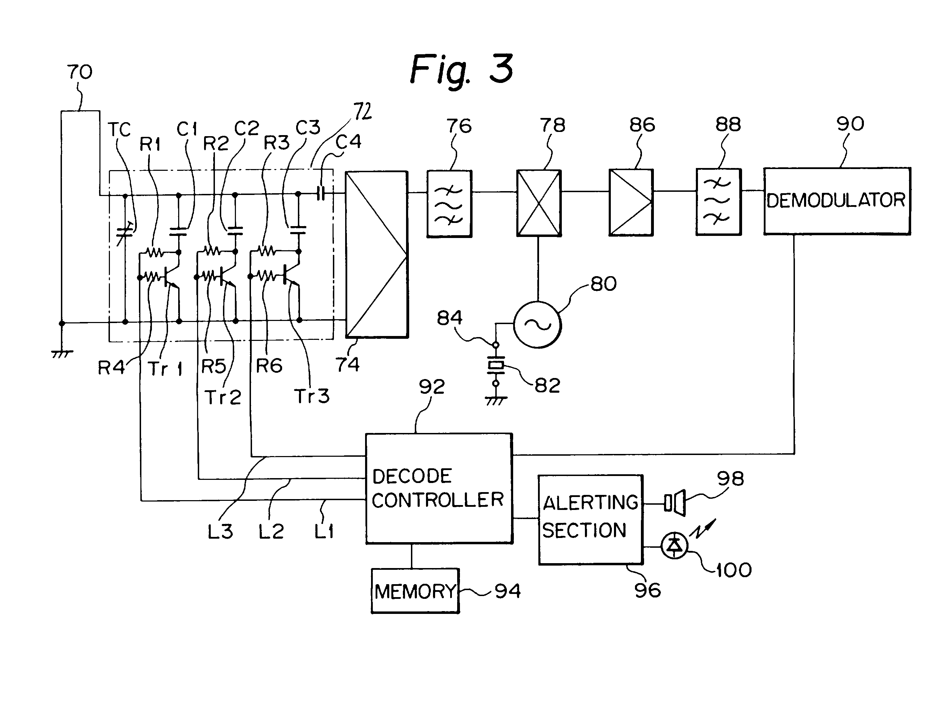

Referring to FIG. 3, a radio pager is shown having an antenna tuning circuit 72 between an antenna 70 and an RF amplifier 74. The tuning circuit 72 is made up of a trimmer capacitor TC, capacitors C₁-C₄, transistors Tr₁-Tr₃, and resistors R₁-R₆ and constructed to minimize the transmission loss at a desired reception frequency. The resistors R₁-R₆ play the role of bias resistors for applying a voltage which the transistors Tr₁-Tr₃ need for switching operations. The RF amplifier 74 delivers an output thereof to a BPF 76. The BPF 76 is implemented as a SAW filter and limits the frequency band to about ±3 to ±5 megahertz of reception frequency. The output of the BPF 76 is applied to one input terminal of a mixer 78. The mixer 78 receives a local oscillation signal from a local oscillation circuit 80 at the other input terminal thereof. A crystal oscillator 82 is connected to the local oscillation circuit 80 via a socket 84 and is replaceable to implement a desired reception frequency.

An IF signal from the mixer 78 is fed to an IF amplifier 86. The amplified IF signal from the IF amplifier 86 is routed through a BPF 88 to a demodulator 90. In response, the demodulator 90 demodulates the data signal having been modulated and delivers the resulting data signal to a decode controller 92. A memory 94 is connected to the decode controller 92 and stores an address assigned to the pager. If an address included in the data signal from the demodulator 90 is identical with the address stored in the memory 94, the decode controller 92 feeds an alert control signal to an alerting section 96. On receiving the alert control signal, the alerting section 96 drives a loudspeaker 98 or an LED 100 to alert the user to the call. The memory 94 stores, in addition to the address assigned to the pager, information designating either of the loudspeaker 98 and LED 100 and information representative of reception frequencies. Control signal lines L₁-L₃ extend from the decode controller 92 to the basis of the transistors Tr₁-Tr₃, respectively. At least when a power switch, not shown, provided on the pager is turned on, the decode controller 92 reads the reception frequency information out of the memory 94 and changes the logical level of one of the control signal lines L₁-L₃ matching the reception frequency to a high level.

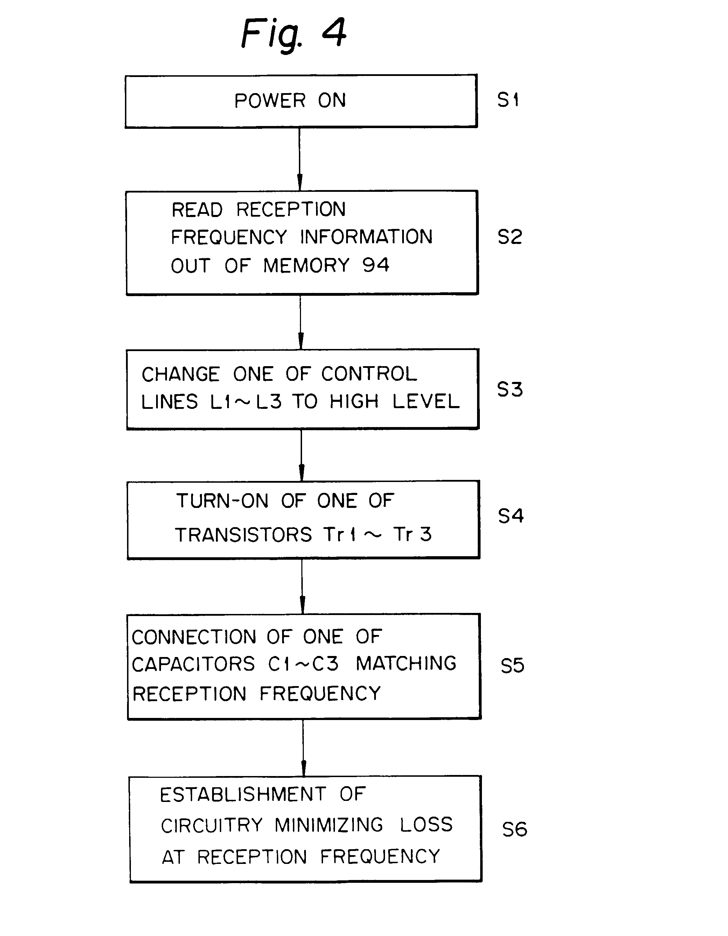

A specific operation of the pager will be described with reference to FIG. 4. The reception frequency information is written to the memory 94 beforehand by a service company in charge of the paging system. In FIG. 4, as the power switch of the pager is turned on (step S1), the decode controller 92 reads the reception frequency information out of the memory 94 (S2) and then changes the logical level of one of the control signal lines L₁-L₃ matching the information to a high level (S3). As a result, one of the transistors Tr₁-Tr₃ connected to the high level control line is rendered conductive (S4). Therefore, one of the capacitors C₁-C₃ connected to the transistor having been turned on is connected in parallel to the trimmer capacitor TC (S5). In such an arrangement, only if the capacitors C₁-C₃ are each provided with a particular capacitance which minimizes the transmission loss at a particular reception frequency band (S6), the reception frequency can be readily changed without resorting to any fine adjustment.

If desired, the decode controller 92 may be so constructed as to read the information out of the memory 94 periodically since the information is susceptible to static electricity and other similar disturbances.

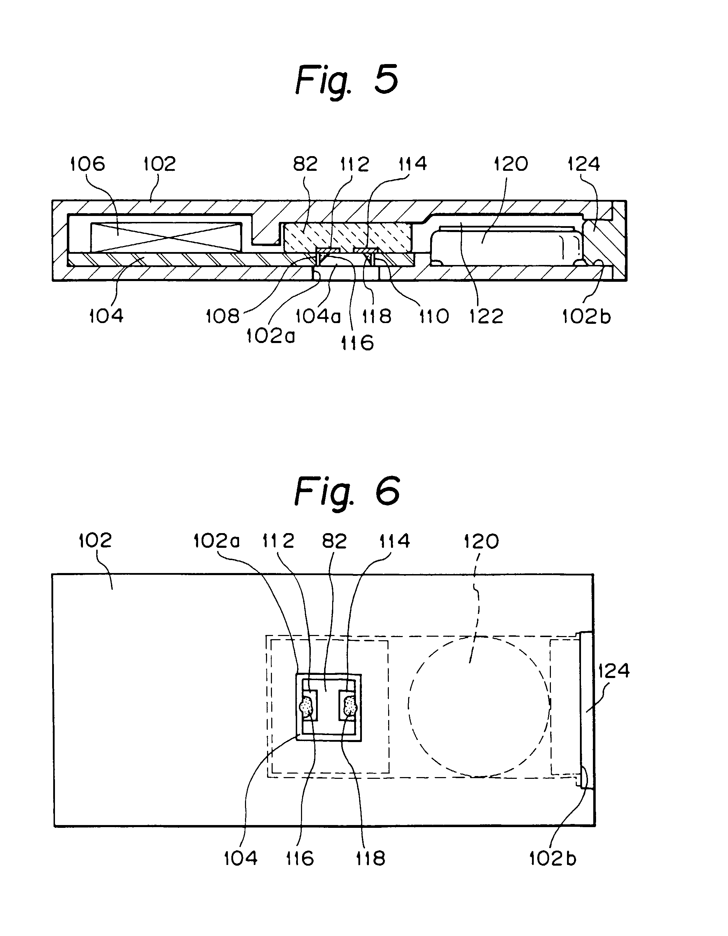

FIGS. 5 and 6 show the structure of the casing which accommodate the circuitry described above with reference to FIG. 3. As shown, the casing 102 accommodates a printed circuit board 104 therein on which the crystal oscillator 82 and circuit part 106 are mounted. The crystal oscillator 82 is affixed to and electrically connected to the printed circuit board 104. Specifically, terminal electrodes 112 and 114 provided on the side of the crystal oscillator 82 facing the circuit board 104 are soldered, as at 116 and 118, to terminals 108 and 110 of the circuit board 104 which are implemented as through holes. The circuit board 104 is affixed to the inner periphery of the casing 102. The casing 102 is formed with a first opening 102a in alignment with a opening 104a formed in the circuit board 104. To attach or detach the crystal oscillator 82, a soldering iron may be inserted into the casing 102. In the illustrative embodiment, a coin type battery 120 is inserted into or removed from a battery chamber 122 formed in the casing 102 through a second opening 102b also formed in the casing 102. A lid 124 usually closes the second opening 102b. The printed circuit board 104 partly extends into the battery chamber 122. The crystal oscillator 82 is mounted on the part of the circuit board 104 which is located in the battery chamber 122. Therefore, the crystal oscillator 82 can be inserted into or removed from the casing 102 by way of the battery chamber 122 and second opening 102b.

The crystal oscillator 82 is replaced with another to change the reception frequency of the pager, as follows. First, a soldering iron is inserted into the casing 102 through the first opening 102a to melt the solder 116 and 118 to thereby disconnect the crystal oscillator 82 from the printed circuit board 104. Then, the lid 124 is removed to pull out the battery 120 from the casing 102 via the second opening 102b. Thereafter, the crystal oscillator 82 having been disconnected from the circuit board 104 is removed from the casing 102. Subsequently, a substitute crystal oscillator 82 and the battery 120 are sequentially inserted into the battery chamber 122 in this order through the second opening 102b. After the opening 102b has been closed by the lid 124, a soldering iron is again inserted into the casing 102 through the first opening 102a to melt the solder 116 and 118. As a result, the substitute crystal oscillator 82 is electrically connected to the circuit board 104. A logotype label, for example, may be adhered to the outer periphery of the casing 102 around the first opening 102a to close it except when replacement is needed.

In summary, it will be seen that the present invention provides a radio pager having a simple design and capable of readily changing the reception frequency thereof without affecting reliability.

Various modifications will become possible for those skilled in the art after receiving the teachings of the present disclosure without departing from the scope of claim 1.

## Claims

1. A radio pager capable of changing a reception frequency thereof, comprising:
a printed circuit board (104) on which a crystal oscillator (82) constituting a local oscillator for changing the reception frequency of the radio pager is mounted; and
a casing (102) for accommodating said printed circuit board (104) and formed with a first opening (102a) for allowing said crystal oscillator (82) and said printed circuit board (104) to be selectively connected or disconnected, and a second opening (102b) for allowing said crystal oscillator (82) to be selectively inserted into or pulled out from said casing (102).

2. A radio pager as claimed in claim 1, wherein said first opening (102a) is located to face terminal electrodes (112, 114) of said crystal oscillator (82) which are soldered to said printed circuit board (104), allowing a soldering iron to be inserted into said casing (102) as far as said terminal electrodes (112, 114).

3. A radio pager as claimed in claim 1 or 2, wherein said second opening (102b) also allows a battery (120) to be selectively inserted into or pulled out from said casing (102).

4. A radio pager as claimed in any of claims 1 to 3, wherein said first opening (102a) is located to face terminal electrodes (112, 114) of said crystal oscillator (82) which are soldered to said printed circuit board (104), allowing a soldering iron to be inserted into said casing (102) as far as said terminal electrodes (112, 114).

## Patentansprüche

1. Funkrufempfänger, der eine Empfangsfrequenz ändern kann, mit:
einer Leiterplatte (104), auf der ein Quarzoszillator (82) montiert ist, der einen lokalen Oszillator zum Ändern der Empfangsfrequenz des Funkrufempfängers bildet; und
einem Gehäuse (102) zum Unterbringen der Leiterplatte (104), das ausgebildet ist mit: einer ersten Öffnung (102a), damit der Quarzoszillator (82) und die Leiterplatte (104) selektiv verbunden und getrennt werden können, und einer zweiten Öffnung (102b), damit der Quarzoszillator (82) selektiv in das Gehäuse (102) eingesetzt oder daraus herausgezogen werden kann.

2. Funkrufempfänger nach Anspruch 1, wobei die erste Öffnung (102a) so angeordnet ist, daß sie zu Anschlußelektroden (112, 114) des Quarzoszillators (82) weist, die mit der Leiterplatte (104) verlötet sind, wobei ein Lötkolben in das Gehäuse (102) bis zu den Anschlußelektroden (112, 114) eingeführt werden kann.

3. Funkrufempfänger nach Anspruch 1 oder 2, wobei durch die zweite Öffnung (102b) auch eine Batterie (120) selektiv in das Gehäuse (102) eingesetzt oder daraus herausgezogen werden kann.

4. Funkrufempfänger nach einem der Ansprüche 1 bis 3, wobei die erste Öffnung (102a) so angeordnet ist, daß sie zu Anschlußelektroden (112, 114) des Quarzoszillators (82) weist, die mit der Leiterplatte (104) verlötet sind, wobei ein Lötkolben in das Gehäuse (102) bis zu den Anschlußelektroden (112, 114) eingeführt werden kann.

## Revendications

1. Récepteur radio d'appel de personnes capable de modifier une fréquence de réception de ce dernier, comprenant :
une carte à circuit imprimé (104) sur laquelle un oscillateur à cristal (82), constituant un oscillateur local pour modifier la fréquence de réception du récepteur radio d'appel de personnes, est monté ; et
un boîtier (102) pour loger ladite carte à circuit imprimé (104) et formé avec une première ouverture (102a) pour permettre audit oscillateur à cristal (82) et à ladite carte à circuit imprimé (104) d'être connectés ou déconnectés, de manière sélective, et avec une seconde ouverture (102b) pour permettre audit oscillateur à cristal (82) d'être inséré ou extrait, de manière sélective, dans ou hors dudit boîtier (102).

2. Récepteur radio d'appel de personnes selon la revendication 1, dans lequel ladite première ouverture (102a) est située en face d'électrodes terminales (112, 114) dudit oscillateur à cristal (82), lesquelles sont soudées à ladite carte à circuit imprimé (104), permettant à un fer à souder d'être inséré dans ledit boîtier (102) aussi loin que lesdites électrodes terminales (112, 114).

3. Récepteur radio d'appel de personnes selon la revendication 1 ou 2, dans lequel ladite seconde ouverture (102b) permet également à une pile (120) d'être insérée ou extraite, de manière sélective, dans ou hors dudit boîtier (102).

4. Récepteur radio d'appel de personnes selon l'une quelconque des revendications 1 à 3, dans lequel ladite première ouverture (102a) est située en face d'électrodes terminales (112, 114) dudit oscillateur à cristal (82), lesquelles sont soudées à ladite carte à circuit imprimé (104), permettant à un fer à souder d'être inséré dans ledit boîtier (102) aussi loin que lesdites électrodes terminales (112, 114).
